# EUROPÄISCHE PATENTANMELDUNG

(11) **EP 2 169 012 A1**
(43) Veröffentlichungstag der Anmeldung: **31.03.2010**
(21) Anmeldenummer: 08165027.7
(22) Anmeldetag: 24.09.2008
(51) Int. Cl.: C09D 5/02, B05D 5/00, C09D 171/00

(54) **Verwendung von Phosphorsäure und/oder eines Phosphorsäureesters bei der Herstellung von Schichten aus mindestens einer wässrigen Dispersion**

(71) Anmelder: Looser Holding AG, 9320 Anton (CH)
(72) Erfinder: Neppl, Bernhard, 50769 Köln (DE); Kadel, Dieter, 9422 Staad (DE)
(74) Vertreter: Dunkelberg, Oliver Thomas Michael

(57) **Zusammenfassung**

Verwendung von Phosphorsäure und/oder eines Phosphorsäureesters zur Verbesserung des Quecksilbereffekts bei der Herstellung von Schichten aus mindestens einem, in wäßriger Dispersion vorliegenden sinter- oder aufschmelzfähigen Polymer sowie ein Verfahren zur Herstellung verbesserter Beschichtungen.

## Beschreibung

Die vorliegende Erfindung betrifft die Verbesserung des Quecksilbereffekts bei der Herstellung von Schichten aus mindestens einem, in wäßriger Dispersion vorliegenden sinter- oder aufschmelzfähigen Polymer, sowie ein Herstellungsverfahren einer solchen Schicht.

Bei den heutigen Anforderung unterschiedlichste Artikel werden immer mehrere Eigenschaften gleichzeitig gestellt. Hinsichtlich dieses mehrfunktionalem Anforderungsprofil müssen die Oberflächen der Artikel insbesondere abriebbeständig gegenüber mechanischen Belastungen sein. Zum anderen müssen die Oberflächen auch chemisch inert sein, insbesondere wenn es sich um Oberflächen für den medizinischen oder alltäglichen Gebrauch (z.B. invasive Instrumente, Kochgeschirr, etc.) handelt. Des Weiteren werden oft antiadhäsive und/oder reibungsvermindernde Eigenschaften gefordert, insbesondere bei technischen Oberflächen (Bohrgestängen, Kolbenringen, Innenschichtungen von Bremszylindern) oder auch bei Alltagsgegenständen (z.B. Kochgeschirr)

In der Vergangenheit hat es viele Versuche gegeben, dieses mehrfunktionale Anforderungsprofil durch verschiedene Oberflächenmodifikationen oder -beschichtungen zu erfüllen.

Insbesondere auf dem Gebiet der Oberflächenbeschichtungen werden seit jüngerer Zeit immer mehr Polymere mit speziellen Eigenschaften verwendet, insbesondere Fluorpolymere oder sogenannte "Hochleistungspolymere". Diese Polymere haben die spezielle Eigenschaft, dass die aus ihnen herstellbaren Oberflächen nicht durch Kondensation oder Polymeristation erhalten werden, sondern durch Sintern oder Aufschmelzen.

Dabei hat sich gezeigt, dass die Verwendung eines einzigen Polymers alleine nicht geeignet ist, die geforderten Eigenschaften der resultierenden Oberflächen zu erfüllen.
Vielmehr werden immer mehr Mischungen unterschiedlichster Polymere eingesetzt, teilweise unter zusätzlicher Verwendung weiterer, nicht polymerhaltigen Substanzen (z.B. anorganische oder metallische Partikel), um die teilweise entgegengesetzten Eigenschaften zu erfordern.

Bei der Herstellung von Schichten aus in wäßriger Dispersion vorliegender sinter- oder aufschmelzfähiger Polymere besteht das Problem, dass dort keine Schichten mit dem gewünschten, sogenannten "Quecksilbereffekt" erhalten werden.
Unter dem Begriff "Quecksilbereffekt" wird verstanden, dass die resultierende Schicht, d.h. die Schicht aus gesinterten oder aufgeschmolzenen Polymeren, ein nasses Aussehen hat, d.h. optisch einen Flüssigkeitseffekt aufweist, obwohl die tatsächliche Beschichtung komplett ausgehärtet und gesintert ist.

Dieser Quecksilbereffekt hat nicht nur einen Einfluß auf die Optik, sondern gewährleistet auch eine optimale Oberflächenbeschaffenheit und Oberflächenstruktur der resultieren Polymerschicht. Auf diese Weise kann wirksam verhindert werden, dass die Oberfläche Lücken oder Einbuchtungen aufweist, die die darunter liegende Schicht frei geben.
Dieses ist von entscheidender Bedeutung bei technischen Oberflächenbeschichtungen, wo die resultierende Polymerschicht aus den gesinterten oder aufgeschmolzenen Polymere eine oder mehrere funktionellen Eigenschaft übernehmen müssen, beispielsweise die Korrosionsbeständigkeit.
Solche Anwendungen treten beispielsweise bei der Beschichtung von Haushaltsgeräten auf, wie z.B. bei der Herstellung von Antihaftbeschichtungen aus sinter- oder aufschmelzfähigen Polymeren (Pfannen, Kochgeschirr etc.).

Aufgabe der vorliegenden Erfindung ist die Bereitstellung eines Verfahrens zur Verbesserung des Quecksilbereffekts von Beschichtungen, die hergestellt werden aus in wäßriger Dispersion vorliegende sinter- oder aufschmelzfähige Polymere.

Diese Aufgabe wird erfindungsgemäß gelöst durch die Verwendung von Phosphorsäure und/oder eines Phosphorsäureesters als Verlaufshilfsmittel und als Netzmittel bei der Herstellung von Schichten aus in wäßriger Dispersion vorliegender sinter- oder aufschmelzfähiger Polymere.

Solche Phosphoräurester sind im Stand der Technik als Dispergierhilfsmittel bzw. Tensid bei der Herstellung von Lacken und Formmassen auf Basis polymerisierbarer Monomere oder Polymere, beispielsweise aus der EP 0 417 490 A2, bekannt. Dort werden solche Verbindungen zur Verhinderung von Mattierungen, Stippenbildungen oder Viskositätserhöhungen eingesetzt.
Es ist nicht bekannt, solche Verbindungen zur Verbesserung des Quecksilbereffekts bei der Herstellung von Schichten aus in wäßriger Dispersion vorliegender sinter- oder aufschmelzfähiger Polymere einzusetzen.

Vor diesem Hintergrund war es überraschend und nicht vorhersehbar, dass der Einsatz von Phosphorsäure bzw. eines Phosphorsäureesters bei der Herstellung von Schichten aus in wäßriger Dispersion vorliegender sinter- oder aufschmelzfähiger Polymere sowohl als Verlaufshilfsmittel als auch als Netzmittel wirkt.

Unter dem Begriff "Verlaufshilfsmittel" wird hier und im folgenden eine Verbindung verstanden, die einen möglichst glatten Verlauf einer Beschichtung ermöglicht.

Unter dem Begriff "Netzmittel" wird hier und im folgenden eine Verbindung verstanden, die die Oberflächenspannung einer Flüssigkeit oder die Grenzflächenspannung zwischen zwei Phasen herabsetzen und die Bildung von Dispersionen ermöglichen oder unterstützen. Solche Netzmittel werden auch als Tenside bezeichnet.

Ebenfalls ist es erstmals möglich, bei Verwendung eines Phosphoräuresters bei der Herstellung von Schichten aus in wäßriger Dispersion auf den Einsatz sogenannten "Colösemittel" ganz zu verzichten.
Diese Colösemittel sind organische Lösemittel, beispielsweise Diacetonalkohol, die zugegeben werden, um die Trocknungsgeschwindigkeit auf dem beschichteten Substrat zu erhöhen (Feuchtigkeitsrückhaltemittel) und dienen zusätzlich als Netzmittel um das Hochleistungspolymer in der Dispersion stabil zu halten.
Solche Colösemittel haben aber den entscheidenden Nachteil, dass sie bei der Herstellung der Schichten in die Atmosphäre abgegeben werden, was eine aufwendige, meist thermische, Entsorgung der Abluft aus umweltpolitischen Gesichtspunkten erfordert.

Beispiele für die erfindungsgemäß eingesetzten Phosphorsäureester sind ein Alkylphosphate mit 1 bis 8 Kohlenstoffatomen im Alkylrest, Bis-(2-ethylhexyl)-phosphat, Tris-(trimethylsilyl)-phosphat, der sekundäre Ester von Orthophosphorsäure mit Triethylenglykol-2-ethylhexyl-ether, nämlich der Formel O=P(OH)[(OCH₂CH₂)₃OCH₂CH(CH₂CH₂)CH₂CH₂CH₂CH₃]₂, saure Phosphorsäureester von Epoxid-Harzen, wie in der EP 0 358 096 beschrieben, sowie andere Phosphorsäureester, die im Handel erhältlich sind und deren Zusammensetzung, wie deren Herstellung beispielsweise in Marlophor™, Präzisionstenside, Hüls AG, Mai 1990, beschrieben ist. Ganz besonders bevorzugt ist Bis-(2-ethylhexyl)-phosphat.

Die Phosphorsäure bzw. der Phosphorsäureester werden in Mengen von vorzugsweise 0,01 bis 2 Gew.-%, bevorzugt 0,1 bis 1,0 Gew.-%, jeweils bezogen auf das Gesamtgewicht an sinteroder aufschmelzbaren Polymeren in der Dispersion eingesetzt.

Bei dem sinter- oder aufschmelzfähigen Polymer handelt es sich bevorzugt um ein Hochleistungspolymer.
Als für die Erfindung geeignete Hochleistungspolymere eignen sich insbesondere Hochleistungsthermoplaste oder -duroplaste, ganz besonders bevorzugt Polysulfone (PSU), Polyphenylensulfide (PPS), Polyphenylethersulfone (PPSU), Polyethersulfone (PES), Polyaryletherketone (PAEK), Polyimide (PI), Polyarylimide (PAI), Polyetherketone (PEK).
Sofern die zuvor genannten Polymere aus mindestens zwei verschiedenen Monomerfragmenten bestehen, sind mit der obigen Definition alle Polymere umfaßt, die durch Variation der Abfolge und deren Verteilung der entsprechenden Fragmente innerhalb des Polymers möglich sind.

Beispielsweise wird unter der Bezeichnung "Polyetherketone (PEK)" auch solche Polymere verstanden, die als "Polyetheretherketone (PEEK)" oder "Polyetherketoketone (PEKK)" bezeichnet werden.
Ganz besonders bevorzugt sind PEK, PEEK, PES und/oder PPS.

Bei der erfindungsgemäßen Verwendung werden Schichten aus mindestens einem, in wäßriger Dispersion vorliegenden sinter- oder aufschmelzfähigen Polymer auf ein Substrat aufgebracht, das ganz oder teilweise aus einem korrosionsanfälligem Metall besteht, insbesondere aus Aluminium, Eisen oder deren Legierungen.

Die so erhaltenen Gegenstände sind solche mit antiadhäsiven und/oder abriebsbeständigen Eigenschaften, insbesondere auf dem technisch-industriellen, medizinischen Gebiet oder als Alltagsgegenstand (beispielsweise Pfannen, Kochgeschirr etc.).

Die vorliegende Erfindung betrifft darüber hinaus ein Verfahren zur Herstellung einer Schicht aus mindestens einem, in wäßriger Dispersion vorliegenden sinter- oder aufschmelzfähigen Polymer, wobei
a) zuerst Phosphorsäure und/oder ein Phosphorsäureester im Colösemittel (insbesondere in doppelter Menge) aufnehmen;
b) dann die aus Schritt a) resultierende Mischung ganz oder teilweise neutralisiert wird;
c) die aus Schritt b) hergestellte Mischung kann jetzt ohne Ausfallerscheinungen mit entionisiertem Wasser weiter gemischt werden
d) dann der aus Schritt c) resultierenden Mischung mindestens ein sinter- oder aufschmelzfähiges Polymer zugeben wird, welches mit der Hand (geeignetes Rührwerkzeug) untergerührt wird;
e) mit einem geeigneten Dispermaten (Hochleistungsdissolver) optimal dispergiert wird;
f) dann der aus Schritt d) resultierenden Mischung entionisiertes Wasser zur Einstellung der Spritzviskosität zugegeben wird;
g) die Mischung aus Schritt f) auf das zu beschichtende Substrat aufgebracht wird;
h) das in Schritt f) beschichtete Substrat bei einer Temperatur oberhalb des Sinter- oder Aufschmelzpunkt des sinter- oder aufschmelzfähigen Polymer erhitzt wird.

Die Reihenfolge der einzelnen Schritte garantiert ein optimales Ergebnis im Hinblick auf den gewünschten Quecksilbereffekt.
Wird beispielsweise die Phosphorsäure erst am Ende des Mischvorgangs hinzugegeben, ist ein verringerter "Quecksilbereffekt" zu beobachten.

Darüber hinaus ist zu beachten, dass die Verwendung von Phosphaten eine deutliche Verringerung von Colösungsmitteln ermöglicht, wobei in diesem Falle eine bestimmte Mischfolge bei der Herstellung der Dispersionen zu beachten ist: zuerst muss das Organophosphat vorgelegt werden, darauf wird das Colösungsmittel gegeben, anschließend wird die Mischung z.B. mit Ammoniak neutralisiert, die daraus entstandene Lösung ist mit voll-entsalztes Wasser beliebig mischbar. Dieser Effekt ist insbesondere bei der Verwendung von Bis(2-ethylhexyl)-phosphat zu beobachten.

Die folgenden Beispiele dienen der Erläuterung der Erfindung, ohne die Erfindung hierauf zu beschränken oder sonst wie einzuschränken.

### Beispiel 1 (erfindungsgemäß):

Im 1,5 I Ansatzbehälter werden die Ausgangskomponenten gemäß der Tabelle I in der angegebenen Reihenfolge gemischt: Zuerst wird das Bis(2-ethylhexyl)-phosphat 1:1 mit Diacetonalkohol gemischt. Dann wird die genannte Menge Ammoniaklösung (32 %ig) und 100 ml Wasser langsam unter Rühren hinzugegeben, bis unter laufendem Rührer eine klare Lösung entsteht. Danach wird das Hochleistungspolymer hinzugegeben und per Hand untergerührt, um so wenig Luft wie möglich hinein zu bekommen, dann wird mit einem geeigneten Dispermaten (Hochleistungsdissolver) das Material dipergiert. Anschließend wird die angegebene Menge entionisiertes Wasser hinzugegeben, um die Mischung auf Verarbeitungsviskosität, d. h. auf Viskosität einstellen, wie das Material am besten zu verarbeiten ist. Die fertige Mischung wird dann noch mit dem Rührer etwa 2 Minuten lang homogenisiert.
Die erhaltene Dispersion hat einen Festkörpergehalt von 27% und eine Viskosität nach ca. 1dPas (Brookfield-Rotationsviskosimeter).

### Vergleichsversuch (nicht erfindungsgemäß):

Das Beispiel 1 wird wiederholt, jedoch ohne Verwendung von Bis(2-ethylhexyl)-phosphat.

Die übrigen Beispiele werden analog zu Beispiel 1 hergestellt, die Menge an Phosphorsäureester variiert und anstelle des Phosphorsäureesters eine 75%ige Phosphorsäurelösung verwendet wird.

### Herstellung der fertigen Beschichtung am Beispiel von Bratpfannen

Die in den Versuchen (Tabelle I) beschriebenen Lösungen wurden auf gestrahlte Aluminium-Druckgusspfannen mittels eines Fliessbechers aufgebracht, in einem Ofen bei einer Temperatur von 150 °C und einer Dauer von 10 Min. getrocknet, dann anschließend in einem weiteren Ofen bei einer Temperatur von 420 °C und einer Dauer von 20 Min. gesintert.
In einem weiteren Versuch wurden Pfannen aus gestrahltem Guß verwendet.

Insgesamt wurden je 5 Pfannen beschichtet und untersucht. Die in der Tabelle I dargestellten Werte sind die resultierenden Mittelwerte.

Die so hergestellten Pfannen werden den nachstehend beschriebenen Untersuchungen unterzogen:

### Beurteilung des Verlaufs

Bei den Pfannen wurde der Verlauf der Pfannen rein visuell beurteilt. Darauf geachtet wurde, ob Stippen zu beobachten sind, d.h. Polymerpartikel, die aus der Lackoberfläche herausstehen. Darüber hinaus wurde beurteilt, ob ein sogenannter "Quecksilbereffekt" zu beobachten war. Unter einem "Quecksilbereffekt" wird verstanden, dass der resultierende Polymerfilm ein nasses Aussehen, d. h. einen optischen Flüssigkeitseffekt aufweist, obwohl die tatsächliche Beschichtung komplett ausgehärtet und gesintert ist.

### Beurteilung der Haftung

Die Untersuchung auf Haftung erfolgt nach der DIN 53 151 bzw. DIN ISO 2409 (Gitterschnitt).
Die Gitterschnittprüfung erfolgt indem die Beschichtung in einem definierten Schnittabstand mit einem scharfen Messer gleichmäßig bis auf den Untergrund eingeritzt wird. Es werden sechs sich rechtwinklig kreuzende Schnitte ausgeführt. Je nach Abplatzungen der Beschichtung wird der Gitterschnittkennwert von Gt 0 bis Gt 4 angegeben, wobei Gt 0 eine sehr gute, Gt 4 eine sehr schlechte Haftfestigkeit ausdrückt.

### Untersuchung des subjektiven Empfindens der Filmeigenschaft

Mit einem Metallgegenstand mit einer scharfen Kante (sog. "Groschentest") wird die Fertigoberfläche bis zum Untergrund verletzt. Aufgrund des Gefühls beim Verletzen des Untergrunds und der daraus resultierenden Kratzgeräusche wird die Zähelastizität subjektiv beurteilt.

Die Tabelle I zeigt deutlich, dass die erfindungsgemäßen Artikel gegenüber den Artikeln des Standes der Technik einen ausgeprägten "Quecksilbereffekt" aufweisen, wobei sich das Gesamteigenschaftsniveau der resultierenden Beschichtung, d.h. der Verlauf, die Haftung auf gedrücktem Aluminium und die Haftung auf gestrahltem Guß, im Vergleich mit dem Beispiel des Standes der Technik ebenfalls signifikant verbessert.

Hinsichtlich der Haftung sind keine deutlich verbesserten Werte zu beobachten sondern vielmehr nur Tendenzen, die allerdings ebenfalls eine verbesserte Ausführungsform gegenüber dem Stand der Technik zeigen. Darüber hinaus ist zu beobachten, dass die Verwendung von Organophosphaten in den entsprechenden Dispersionen tendenziell zur Erhöhung der Korrosionsbeständigkeit führt.

Die folgenden Abbildungen 1 und 2 zeigen die beschichteten Pfannen aus dem Vergleichsversuch und dem erfindungsgemäßen Beispiel 1 kurz nach der Entnahme aus dem Ofen (also in heißem Zustand):

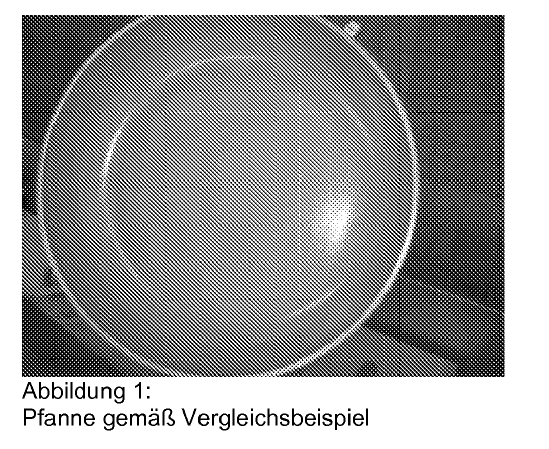

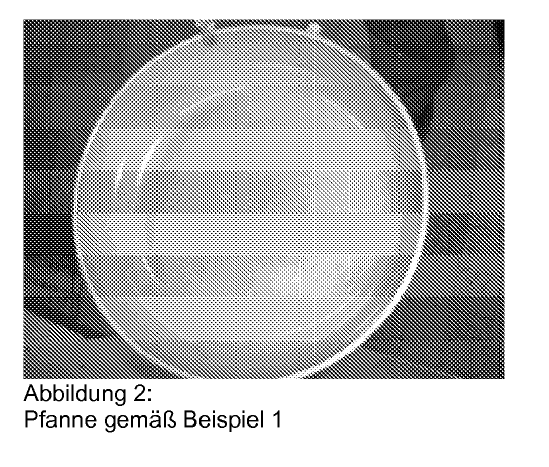

In diesen Abbildungen ist der der verbesserte Verlauf der resultierenden Beschichtung ( "Quecksilbereffekt") deutlich sichtbar.

Die folgenden Abbildungen 3 und 4 zeigen das Mischen der Ausgangskomponenten für den Vergleichsversuch und das erfindungsgemäße Beispiel 1):

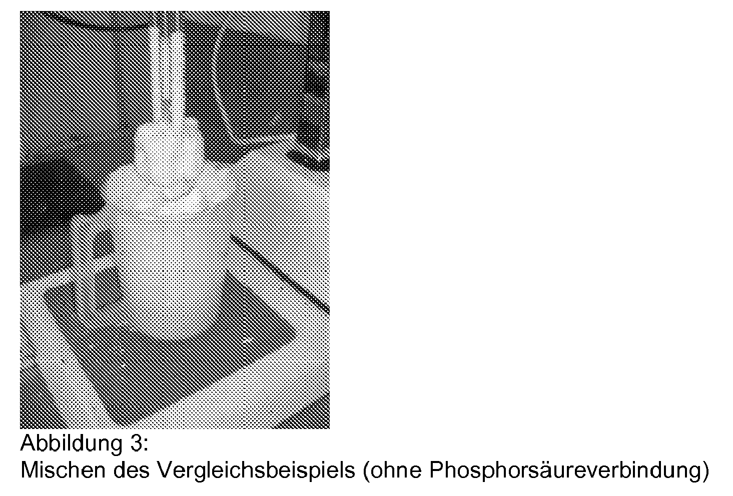

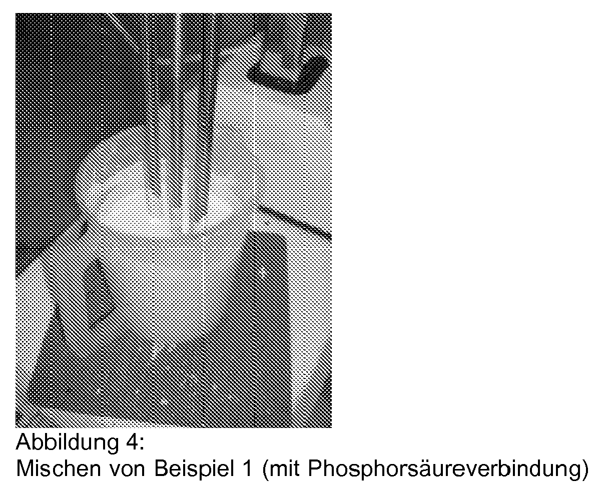

Deutlich zu erkennen ist die bessere Benetzung (keine Schaumbildung aufgrund besserer Benetzung) beim erfindungsgemäßen Beispiel, was auf die Eigenschaften der Phosphorsäure bzw. des Phosphorsäureesters als Netzmittel zurückzuführen ist.

**Tabelle I**

| | Vergleichsversuch | Beispiel 1 | Beispiel 2 | Beispiel 3 | Beispiel 4 |
|---|---|---|---|---|---|
| Bis (2-ethylhexyl)-phosphat | 0 | 2 | 10 | 0 | 0 |
| 75% Phosphorsäure | 0 | 0 | 0 | 2 | 10 |
| | | | | | |
| Diacetonalkohol | 10 | 10 | 10 | 10 | 10 |
| Ammoniak LSG | 10 | 10 | 10 | 10 | 10 |
| entionisiertes Wasser | 100 | 100 | 100 | 100 | 100 |
| | | | | | |
| Vitrex 708 (PEK) | 271 | 271 | 271 | 271 | 271 |
| entionisiertes Wasser | 609 | 609 | 609 | 609 | 609 |
| | | | | | |
| Gesamtmenge | 1000 | 1002 | 1010 | 1002 | 1010 |

| Verlauf | 0 (sehr geringer "Quecksilbereffekt" im Nassen) | ++ glatter, deutlich weniger Stippen, im Nassen "Quecksilbereffekt" | ++ weniger glatter, deutlich weniger Stippen, im Nassen "Quecksilbereffekt" (vergleichbar Beispiel 1) | + glatt, deutlich weniger Stippen wie Vergleichsversuch aber etwas schlechter wie Beispiel 1, im Nassen "Quecksilbereffekt" | + vergleichbar wie Vergleichsversuch, "Quecksilbereffekt" im Nassen ausgeprägter |
|---|---|---|---|---|---|
| Haftung auf gedrückten, gestrahltem Aluminium Gitterschnitt | GT 0-vereinzelte Ausreißer | GT 0 | GT 0 | GT 0 | GT 0 |
| Haftung auf gestrahltem Guß | GT 0-1 Ausreißer | GT 0 | GT 0 | GT 0 | GT 0 |

Alle Angaben in g (Einwaage)

## Patentansprüche

1. Verwendung von Phosphorsäure und/oder eines Phosphorsäureesters zur Verbesserung des Quecksilbereffekts bei der Herstellung von Schichten aus mindestens einem, in wäßriger Dispersion vorliegenden sinter- oder aufschmelzfähigen Polymer.

2. Verwendung nach Anspruch 1, **dadurch gekennzeichnet, dass** der Phosphorsäureester ein Alkylphosphat mit 1 bis 8 Kohlenstoffatomen im Alkylrest ist.

3. Verwendung nach Anspruch 1 oder 2, **dadurch gekennzeichnet, dass** die organische Phosphorsäureverbindung Bis-(2-ethylhexyl)-phosphat ist.

4. Verwendung nach einem der vorherigen Ansprüche, **dadurch gekennzeichnet, dass** das sinter- oder aufschmelzfähigen Polymer ein Hochleistungsthermoplast ist, insbesondere PEK, PEEK, PES oder PPS.

5. Verwendung nach einem der vorherigen Ansprüche, **dadurch gekennzeichnet, dass** Schichten aus mindestens einem, in wäßriger Dispersion vorliegenden sinter- oder aufschmelzfähigen Polymer auf ein Substrat aufgebracht wird, das ganz oder teilweise aus einem korrosionsanfälligem Metall besteht, insbesondere aus Aluminium, Eisen oder deren Legierungen.

6. Verwendung einem der vorherigen Ansprüche bei der Herstellung von einem Gegenstand mit antiadhäsiven und/oder abriebsbeständigen Eigenschaften, insbesondere auf dem technisch-industriellen, medizinischen Gebiet oder als Alltagsgegenstand.

7. Verfahren zur Herstellung einer Schicht aus mindestens einem, in wäßriger Dispersion vorliegenden sinter- oder aufschmelzfähigen Polymer, wobei
a) zuerst Phosphorsäure und/oder ein Phosphorsäureester im Colösemittel (insbesondere in doppelter Menge) aufnehmen;
b) dann die aus Schritt a) resultierende Mischung ganz oder teilweise neutralisiert wird;
c) die aus Schritt b) hergestellte Mischung kann jetzt ohne Ausfallerscheinungen mit entionisiertem Wasser weiter gemischt werden
d) dann der aus Schritt c) resultierenden Mischung mindestens ein sinter- oder aufschmelzfähiges Polymer zugeben wird, welches mit der Hand (geeignetes Rührwerkzeug) untergerührt wird;
e) mit einem geeigneten Dispermaten optimal dispergiert wird;
f) dann der aus Schritt d) resultierenden Mischung entionisiertes Wasser zur Einstellung der Spritzviskosität zugegeben wird;
g) die Mischung aus Schritt f) auf das zu beschichtende Substrat aufgebracht wird;
h) das in Schritt f) beschichtete Substrat bei einer Temperatur oberhalb des Sinter- oder Aufschmelzpunkt des sinter- oder aufschmelzfähigen Polymer erhitzt wird.
